(19) Europäisches Patentamt
European Patent Office
Office européen des brevets

(11) Veröffentlichungsnummer: **0 169 483**
**B1**

(12) # EUROPÄISCHE PATENTSCHRIFT

(45) Veröffentlichungstag der Patentschrift: **15.11.89**

(51) Int. Cl.⁴: **C 09 B 29/033**, D 06 P 1/18, C 09 B 29/36

(21) Anmeldenummer: **85108902.9**

(22) Anmeldetag: **16.07.85**

(54) **Heterocyclische Azofarbstoffe.**

(30) Priorität: **24.07.84 DE 3427201**

(43) Veröffentlichungstag der Anmeldung: **29.01.86 Patentblatt 86/5**

(45) Bekanntmachung des Hinweises auf die Patenterteilung: **15.11.89 Patentblatt 89/46**

(84) Benannte Vertragsstaaten: **CH DE FR GB IT LI**

(56) Entgegenhaltungen:
**FR-A-2 388 860**
**FR-A-2 401 960**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Bergmann, Udo, Dr., Merckstrasse 26, D-6100 Darmstadt (DE)**
Erfinder: **Hahn, Erwin, Dr., Am Buechsenackerhang 31, D-6900 Heidelberg (DE)**
Erfinder: **Hansen, Guenter, Dr., Alwin- Mittasch-Platz 8, D-6700 Ludwigshafen (DE)**

**EP 0 169 483 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft Verbindungen der allgemeinen Formel I

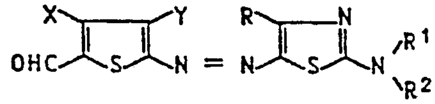

I,

in der

X Wasserstoff, Nitro, $C_1$- bis $C_8$-Alkyl, das noch durch Chlor, Brom Methoxy oder Phenyl substituiert sein kann, gegebenenfalls durch Chlor, Brom Methyl, Ethyl, Methoxy, Ethoxy oder Nitro substituiertes Phenyl, Thienyl oder Furyl oder ein Alkenyl- oder Cycloalkylrest,

Y Cyan, Nitro, Alkanoyl, Aroyl, Alkylsulfonyl, Arylsulfonyl, Carboxyl, Carbonester, Carbamoyl, $CONHCH_3$, $CONHC_2H_5$, $CONHC_4H_9$, $CONHC_6H_{13}$, $CONHC_8H_{17}$, $CON(CH_3)_2$, $CON(C_2H_5)_2$, $CON(C_4H_9)_2$,

$CON\begin{smallmatrix}CH_3\\C_2H_5\end{smallmatrix}$, 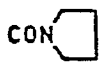, 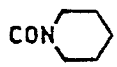 oder 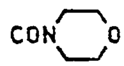,

R gegebenenfalls durch $C_1$ - bis $C_{10}$-Alkyl, $C_1$-bis $C_{10}$-Alkoxy, β-Cyanethoxy, Phenoxy, Benzyloxy, Phenyl, Chlor, Brom, Nitro, $C_1$- bis $C_4$-Alkoxycarbonyl, $C_1$- bis $C_4$-Mono- oder Dialkylamino, $C_1$- bis $C_4$-Alkoxy-ethoxy, $C_1$- bis $C_4$-Alkyl- oder Phenylmercapto oder $C_1$- bis $C_5$-Alkanoylamino ein- oder mehrfach substituiertes Phenyl, $C_1$- bis $C_4$-Alkyl, $C_1$- bis $C_4$-Alkoxycarbonylmethyl, Cyanmethyl, Benzyl oder gegebenenfalls durch Chlor oder Methyl substituiertes Thienyl,

$R^1$ Wasserstoff oder $R^2$ und

$R^2$ $C_1$- bis $C_6$-Alkyl, das durch Chlor, Brom, Hydroxy, $C_1$- bis $C_8$-Alkoxy, Phenoxy, Cyan, Carboxy, $C_1$- bis $C_8$-Alkanoyloxy, $C_1$- bis $C_8$-Alkoxy-$C_1$-$C_4$-alkoxy, Benzoyloxy, o-, m-, p-Methylbenzoyloxy, o-, m-, p-Chlorbenzoyloxy, $C_1$- bis $C_8$-Alkoxyalkanoyloxy, Phenoxyalkanoyloxy, $C_1$- bis $C_8$-Alkoxycarbonyloxy, $C_1$- bis $C_8$-Alkoxyalkoxycarbonyloxy, Benzyloxycarbonyloxy, Phenethyloxycarbonyloxy, Phenoxyethoxycarbonyloxy, $C_1$- bis $C_8$-Alkylaminocarbonyloxy, Cyclohexylaminocarbonyloxy, Phenylaminocarbonyloxy, $C_1$- bis $C_8$-Alkoxycarbonyl, $C_1$- bis $C_8$-Alkoxyalkoxycarbonyl, Phenoxycarbonyl, Benzyloxycarbonyl, Phenoxy-$C_1$-$C_4$-alkoxy oder Phenethyloxycarbonyl substituiert sein kann, Alkenyl, Cycloalkyl, Aralkyl oder Aryl oder $R^1$ und $R^2$ zusammen unter Einschluß des Stickstoffatoms, ein Morpholinrest sind.

Die FR-A-2 401 960 sowie die FR-A 2 388 860 beschreiben Azofarbstoffe, deren Diazokomponenten sich von 2-Aminothiophenen ableiten. Kupplungskomponenten in der FR-A 2 401 960 sind 2-Aminothiazole und in der FR-A 2 388 860 Aniline. Es hat sich jedoch gezeigt, daß die aus der FR-A 2 401 960 bekannten Farbstoffe anwendungstechnische Mängel aufweisen.

Reste X sind neben den bereits genannten z. B. gegebenenfalls durch Chlor, Brom, Methyl, Ethyl, Methoxy, Ethoxy oder Nitro substituiertes Phenyl, Thienyl oder Furyl.

Einzelne Alkylreste sind z.B.:

$CH_3$, $C_2H_5$, $C_3H_7$, $C_4H_9$, $C_5H_{11}$, $C_6H_{13}$, $C_8H_{17}$ oder $CH_2CH\begin{smallmatrix}C_2H_5\\C_4H_9\end{smallmatrix}$,

wobei durch die abgekürzte Formel auch die n- und i-Reste umfaßt sind. Einzelne Reste Y sind neben den bereits genannten z.B.:

$CH_3CO$, $C_2H_5CO$, $C_3H_7CO$, $C_4H_9CO$, $C_5H_{11}CO$, $C_7H_{15}CO$, $OCCH\begin{smallmatrix}C_2H_5\\C_4H_9\end{smallmatrix}$, $C_6H_5CO$,

$CH_3C_6H_4CO$, $ClC_6H_4CO$, $(CH_3)_2C_6H_3CO$, $H_3COC_6H_4CO$, $Cl_2C_6H_3CO$, $CH_3SO_2$, $C_2H_5SO_2$, $C_4H_9SO_2$, $C_6H_5SO_2$, $CH_3C_6H_4SO_2$, $ClC_6H_4SO_2$, $COOCH_3$, $COOC_2H_5$, $COOC_3H_7$,

$COOC_4H_9$, $COOC_6H_{13}$, $COOC_8H_{17}$, $COOCH_2CH\genfrac{}{}{0pt}{}{C_2H_5}{C_4H_9}$, $COOC_2H_4OCH_3$, $COOC_2H_4OC_2H_5$,

$COOC_2H_4OC_4H_9$, $COOC_6H_4CH_3$ oder $COOC_6H_4CH_3$.

Reste $R^2$ sind neben den bereits genannten z. B. Phenyl, Benzyl, Phenethyl oder Cyclohexyl.

Einzelne Reste $R^2$ sind z. B. Methyl, Ethyl, Propyl, Butyl, Pentyl, Hexyl, Allyl, Methallyl, 2-Chlorethyl, 2-Bromethyl, 2-Cyanethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyl-oxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethyl-aminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-β-Phenylethoxycarbonylethyl, 2-Methoxyethoxycarbonylethyl, 2-Ethoxyethoxy-carbonylethyl, 2-Propoxyethoxycarbonylethyl, 2-Butoxyethoxycarbonylethyl, 2-Phenoxyethoxycarbonylethyl oder 2-Benzoylethyl.

Einzelne Reste R sind neben den bereits genannten z. B.: Phenyl, o-, m-, p-Methylphenyl, o-, m-, p-Ethylphenyl, o-, m-, p-Methoxyphenyl, o-, m-, p-Ethoxyphenyl, o-, m-, p-Chlorphenyl, o-, m-, p-Acetylaminophenyl, o-, m-, p-Bromphenyl, o-, m-, p-Nitrophenyl, $(CH_3)_2C_6H_3$, $(C_2H5)_2C_6H_3$, $Cl_2C_6H_3$, o-, m-, p-Propionylaminophenyl, o-, m-, p-Butanoylaminophenyl, o-, m-, p-β-Cyanethoxyphenyl, Methyl, Ethyl, n- und i-Propyl, n-, i- und s-Butyl oder Thienyl.

Die Verbindungen der Formel I haben rote bis blaue Farbtöne und eignen sich insbesondere zum Färben von Polyestern, Polyamiden, Celluloseestern und Mischgeweben aus Polyestern und Cellulosefasern. Man erhält Färbungen mit in der Regel guten bis sehr guten Echtheiten, insbesondere auf Polyestern.

Zur Herstellung der Verbindungen der Formel I kann man Diazoniumverbindungen von Aminen der Formel

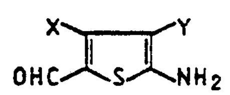

mit Verbindungen der Formel

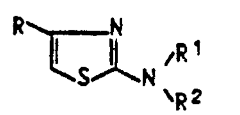

nach an sich bekannten Methoden umsetzen. Einzelheiten der Herstellung können den Beispielen entnommen werden, in denen sich Angaben über Teile und Prozente, sofern nicht anders vermerkt, auf das Gewicht beziehen.

Von besonderer Bedeutung sind Verbindungen der Formel Ia

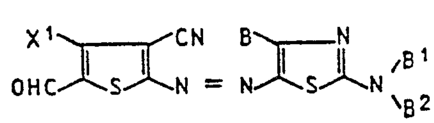

in der

$X^1$ Wasserstoff, $C_1$- bis $C_4$-Alkyl, gegebenenfalls durch Methyl, Ethyl, Methoxy, Ethoxy, Chlor, Brom oder Nitro substituiertes Phenyl, Thienyl oder Furyl,

B gegebenenfalls durch Chlor, Brom, $C_1$- bis $C_4$-Alkoxy, β-Cyanethoxy, Methyl, Ethyl oder $C_1$- bis $C_4$-Alkanoylamino substituiertes Phenyl und

$B^1$ und $B^2$ unabhängig voneinander gegebenenfalls durch Hydroxy, Cyan, $C_1$- bis $C_4$-Alkoxy, $C_1$- bis $C_8$-Alkoxycarbonyl, $C_1$- bis $C_8$-Alkanoyloxy, $C_1$- bis $C_4$-Alkoxycarbonyloxy oder $C_1$- bis $C_4$-Alkyl-aminocarbonyloxy substituiertes $C_1$- bis $C_4$-Alkyl, ferner Benzyl, Phenylethyl, Cyclohexyl, Allyl, Chlorallyl oder Phenyl sind, wobei einer der Reste $B^1$ oder $B^2$ auch Wasserstoff sein kann.

**Beispiel 1**

21,6 Teile 2-Amino-3-cyan-4-phenyl-5-formylthiophen wurden in eine Mischung aus 150 Teilen Eisessig /Propionsäure (3 : 1) und 70 Teilen 85 %-iger Schwefelsäure eingetragen. Bei 0 - 5°C wurden 32 Teile Nitrosylschwefelsäure (11,5 % $N_2O_3$) zugetropft. Anschließend ließ man 4 Stunden bei 0 - 5°C rühren.

24,0 Teile 2-Diethylamino-4-phenyl-thioazol wurden in 100 Teilen Dimethylformamid gelöst und die Lösung in 400 Teile Eis und 2 Teile Amidosulfonsäure gegeben. Die zuvor erhaltene Diazolösung wurde im Laufe von 2 Stunden unter Außenkühlung mit Eis/Wasser zugegeben und über Nacht ohne weitere Kühlung gerührt. Nach dem Absaugen, Neutralwaschen mit Wasser und Trocknen bei 80°C im Vakuumtrockenschrank wurden 40 Teile eines blauschwarzen Pulvers der Formel

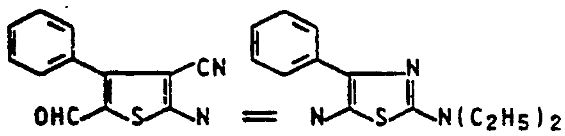

erhalten, das Polyestergewebe in echten königsblauen Tönen färbt.

Verwendet man an Stelle von 24 Teilen 2-Diethylamino-4-phenyl-thiazol 23,9 Teile 2-Diethylamino-4-(2'-thienyl)-thiazol und verfährt wie oben beschrieben, so erhält man 42 Teile eines blauschwarzer Pulvers, das Polyesterfasern in echten Türkistönen färbt.

Analog werden auch die in der folgenden Tabelle gekennzeichneten Farbstoffe erhalten.

D—N = N—K

| Bsp. | D | K | Farbton auf Polyester |
| --- | --- | --- | --- |
| 2 | 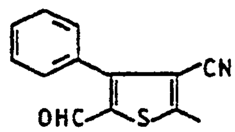 | 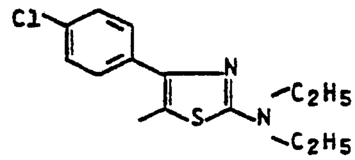 | blau |
| 3 | 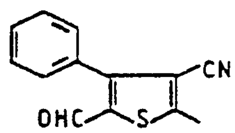 | 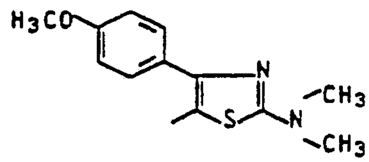 | grünstichig blau |
| 4 | 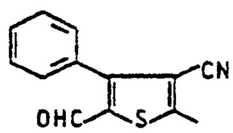 | 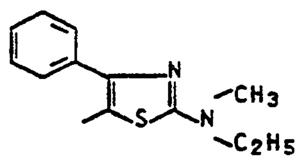 | blau |
| 5 | 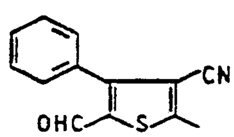 | 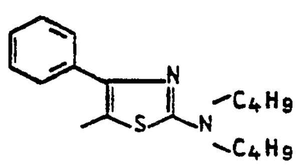 | blau |
| 6 | 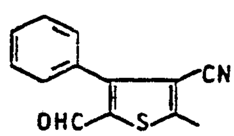 | 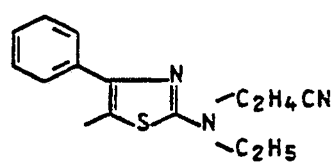 | rotstichig blau |
| 7 | 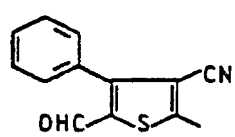 | 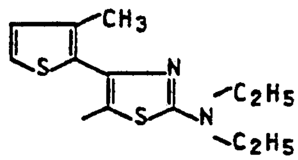 | türkis |
| 8 | 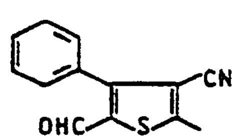 | 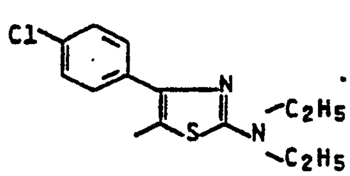 | blau |

$D-N=N-K$

| Bsp. | D | K | Farbton auf Polyester |
|---|---|---|---|
| 9 | 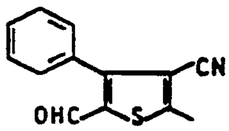 | 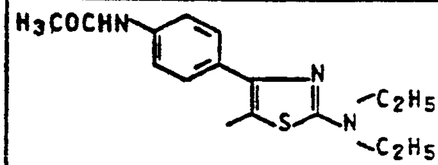 | türkis |
| 10 | 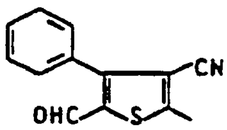 | 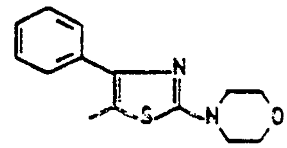 | grünstichig blau |
| 11 | 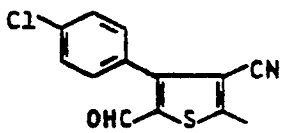 | 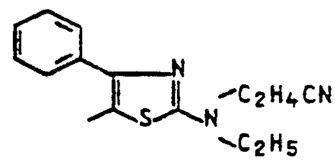 | blau |
| 12 | 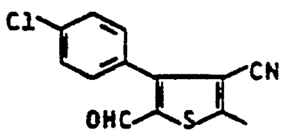 | 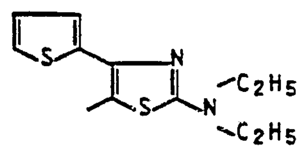 | grün |
| 13 | 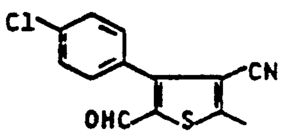 | 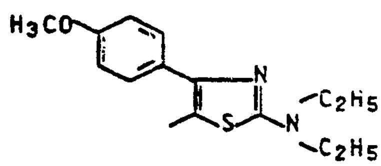 | türkis |
| 14 | 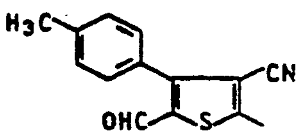 | 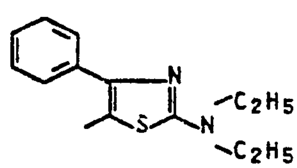 | blau |
| 15 | 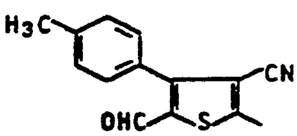 | 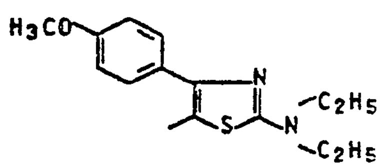 | grünstichig blau |

D—N = N—K

| Bsp. | D | K | Farbton auf Polyester |
|---|---|---|---|
| 16 | 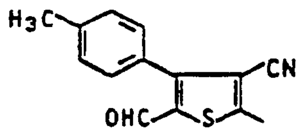 | 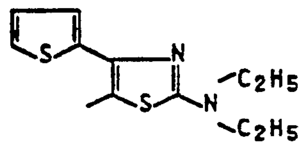 | türkis |
| 17 | 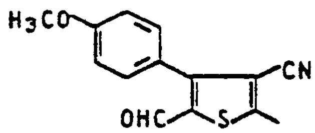 | 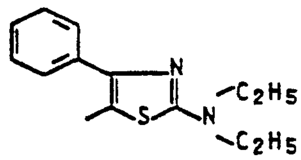 | grünstichig blau |
| 18 | 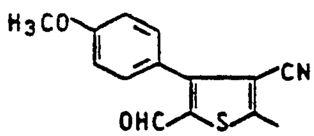 | 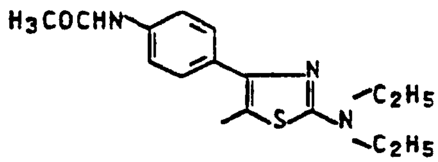 | türkis |
| 19 | 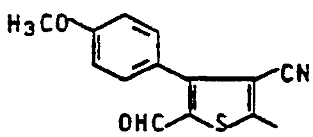 | 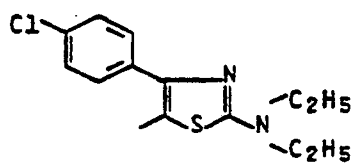 | grünstichig blau |
| 20 | 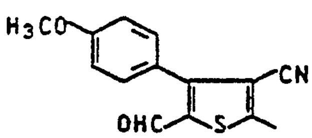 | 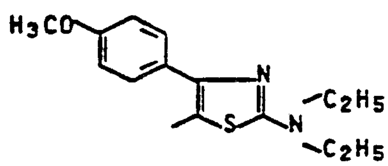 | grünstichig blau |
| 21 | 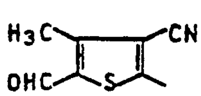 | 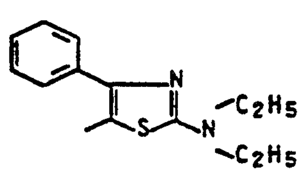 | blau |
| 22 | 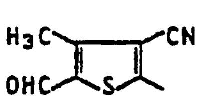 | 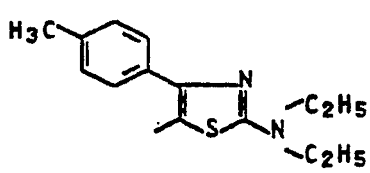 | blau |

D—N = N—K

| Bsp. | D | K | Farbton auf Polyester |
|---|---|---|---|
| 23 | 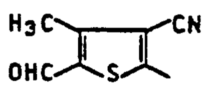 | 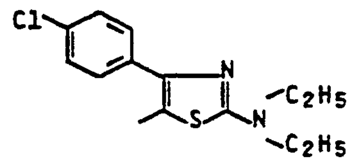 | blau |
| 24 | 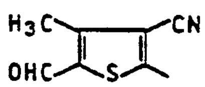 | 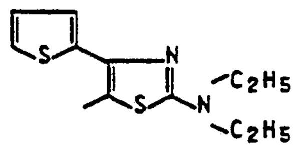 | blau |
| 25 | 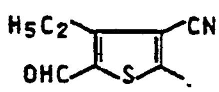 | 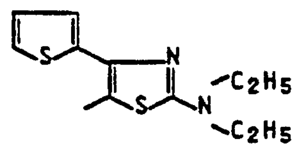 | blau |
| 26 | 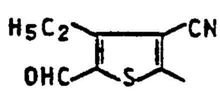 | 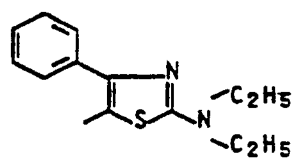 | blau |
| 27 | 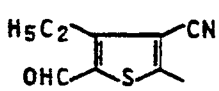 | 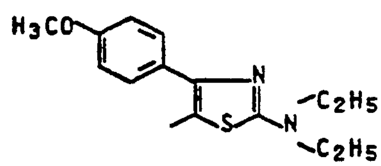 | blau |
| 28 | 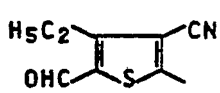 | 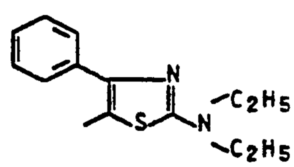 | blau |
| 29 | 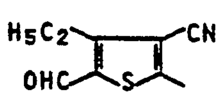 | 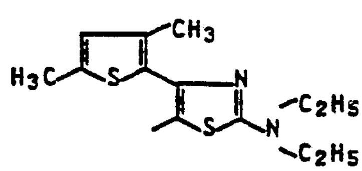 | blau |

D—N = N—K

| Bsp. | D | K | Farbton auf Polyester |
|---|---|---|---|
| 30 | 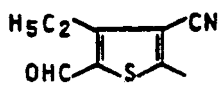 | 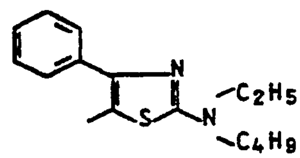 | blau |
| 31 | 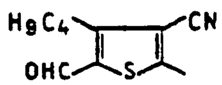 | 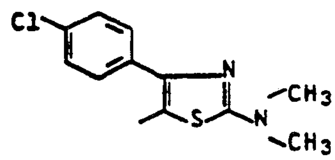 | blau |
| 32 | 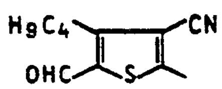 | 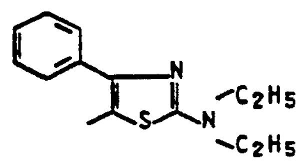 | blau |
| 33 | 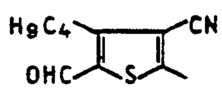 | 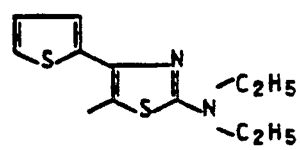 | blau |
| 34 | 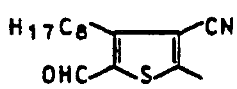 | 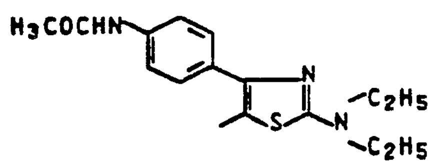 | blau |
| 35 | 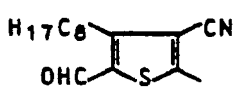 | 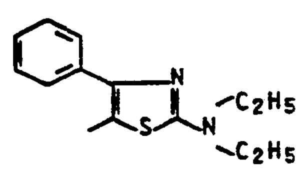 | blau |
| 36 | 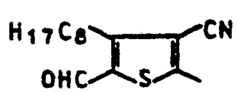 | 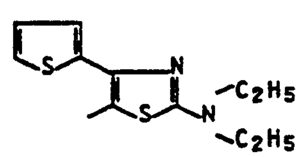 | blau |

D—N = N—K

| Bsp. | D | K | Farbton auf Polyester |
|---|---|---|---|
| 37 | 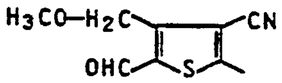 | 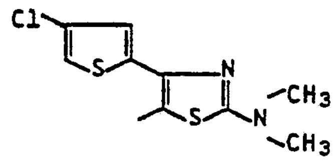 | blau |
| 38 | 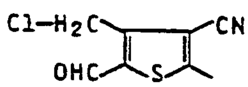 | 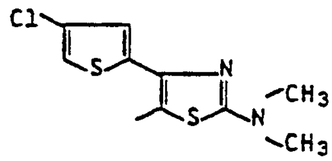 | blau |
| 39 | 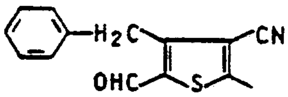 | 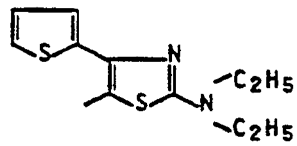 | blau |
| 40 | 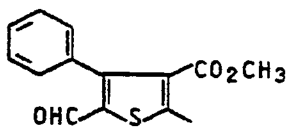 | 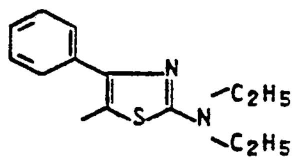 | blau |
| 41 | 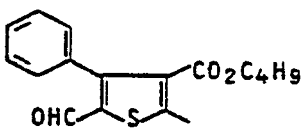 | 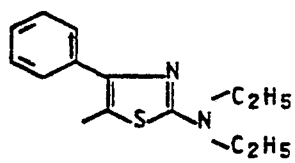 | blau |
| 42 | 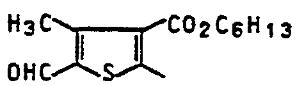 | 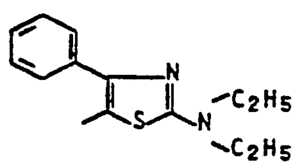 | violett |
| 43 | 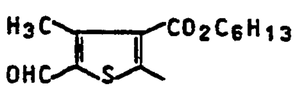 | 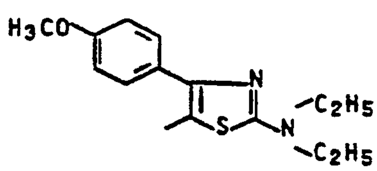 | blau |

D—N = N—K

| Bsp. | D | K | Farbton auf Polyester |
|---|---|---|---|
| 44 | 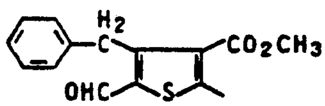 | 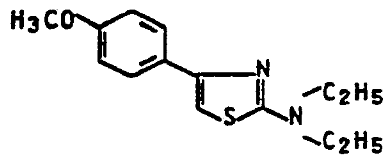 | blau |
| 45 | 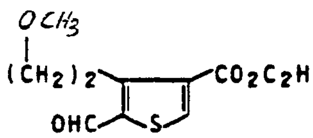 | 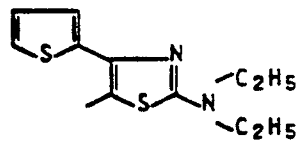 | blau |
| 46 | 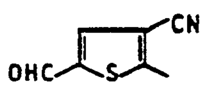 | 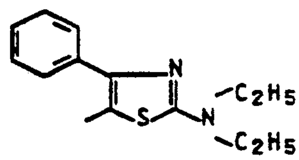 | blau |
| 47 | 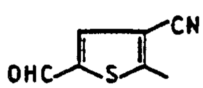 | 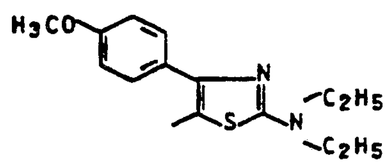 | blau |
| 48 | 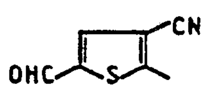 | 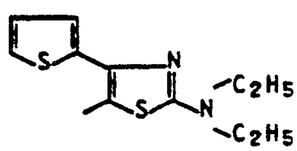 | blau |
| 49 | 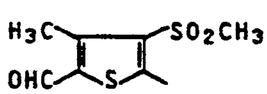 | 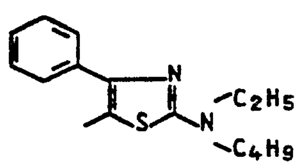 | blau |
| 50 | 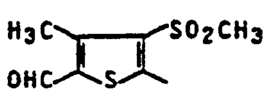 | 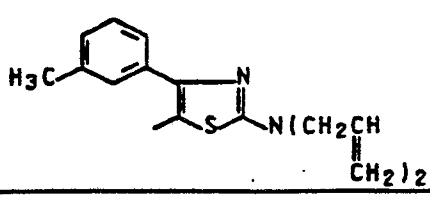 | blau |

D—N = N—K

| Bsp. | D | K | Farbton auf Polyester |
|---|---|---|---|
| 51 | 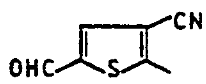 | 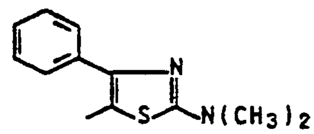 | blau |
| 52 | 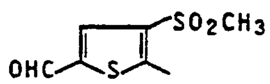 | 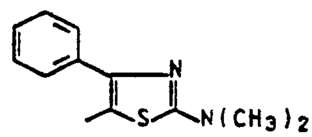 | blau |
| 53 | 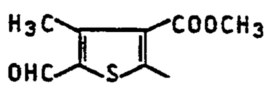 | 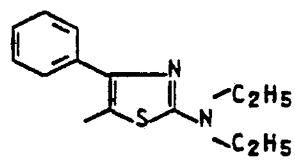 | blau |
| 54 | 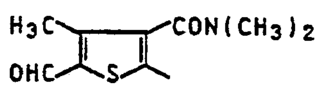 | 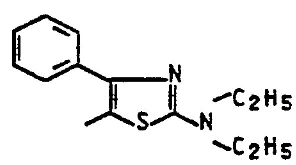 | blau |
| 55 | 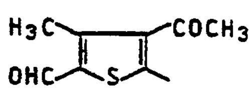 | 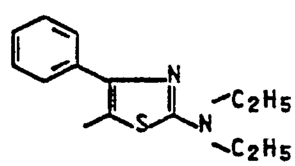 | blauviolett |
| 56 | 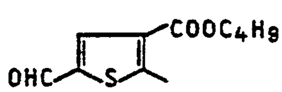 | 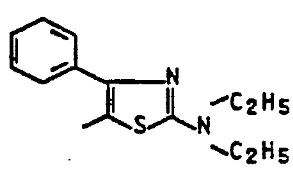 | blau |
| 57 | 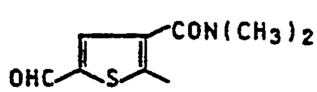 | 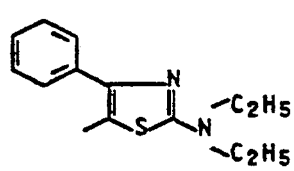 | blau |

D—N = N—K

| Bsp. | D | K | Farbton auf Polyester |
| --- | --- | --- | --- |
| 58 | 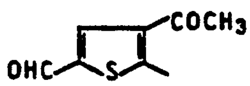 | 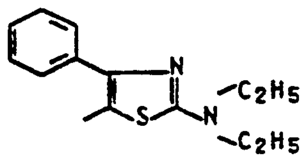 | blau |
| 59 | 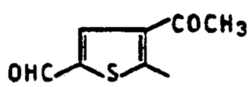 | 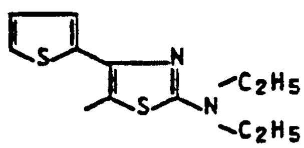 | blau |

**Patentansprüche**

1. Verbindungen der allgemeinen Formel I

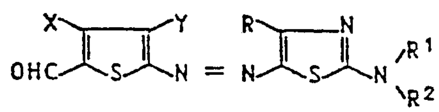 I,

in der

X Wasserstoff, Nitro, $C_1$- bis $C_8$-Alkyl, das noch durch Chlor, Brom, Methoxy oder Phenyl substituiert sein kann, gegebenenfalls durch Chlor, Brom, Methyl, Ethyl, Methoxy, Ethoxy oder Nitro substituiertes Phenyl, Thienyl oder Furyl oder ein Alkenyl- oder Cycloalkylrest,

Y Cyan, Nitro, Alkanoyl, Aroyl, Alkylsulfonyl, Arylsulfonyl, Carboxyl, Carbonester, Carbamoyl, $CONHCH_3$, $CONHC_2H_5$, $CONHC_4H_9$, $CONHC_6H_{13}$, $CONHC_8H_{17}$, $CON(CH_3)_2$, $CON(C_2H_5)_2$, $CON(C_4H_9)_2$,

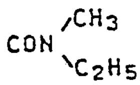, 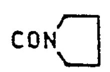, 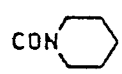 oder 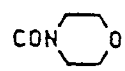,

R gegebenenfalls durch $C_1$- bis $C_{10}$-Alkyl, $C_1$- bis $C_{10}$-Alkoxy, β-Cyanethoxy, Phenoxy, Benzyloxy, Phenyl, Chlor, Brom, Nitro, $C_1$- bis $C_4$-Alkoxycarbonyl, $C_1$- bis $C_4$-Mono- oder Dialkylamino, $C_1$- bis $C_4$-Alkoxy-ethoxy, $C_1$- bis $C_4$-Alkyl- oder Phenylmercapto oder $C_1$- bis $C_5$-Alkanoylamino ein- oder mehrfach substituiertes Phenyl, $C_1$- bis $C_4$-Alkyl, $C_1$- bis $C_4$-Alkoxycarbonylmethyl, Cyanmethyl, Benzyl oder gegebenenfalls durch Chlor oder Methyl substituiertes Thienyl,

$R^1$ Wasserstoff oder $R^2$ und

$R^2$ $C_1$- bis $C_6$-Alkyl, das durch Chlor, Brom, Hydroxy, $C_1$- bis $C_8$-Alkoxy, Phenoxy, Cyan, Carboxy, $C_1$- bis $C_8$-Alkanoyloxy, $C_1$- bis $C_8$-Alkoxy-$C_1$-$C_4$-alkoxy, Benzoyloxy, o-, m-, p-Methylbenzoyloxy, o-, m-, p-Chlorbenzoyloxy, $C_1$- bis $C_8$-Alkoxyalkanoyloxy, Phenoxyalkanoyloxy, $C_1$- bis $C_8$-Alkoxycarbonyloxy, $C_1$- bis $C_8$-Alkoxyalkoxycarbonyloxy, Benzyloxycarbonyloxy, Phenethyloxycarbonyloxy, Phenoxyethoxycarbonyloxy, $C_1$- bis $C_8$-Alkylaminocarbonyloxy, Cyclohexylaminocarbonyloxy, Phenylaminocarbonyloxy $C_1$- bis $C_8$-Alkoxycarbonyl, $C_1$- bis $C_8$-Alkoxyalkoxycarbonyl, Phenoxycarbonyl, Benzyloxycarbonyl, Phenoxy-$C_1$-$C_4$-alkoxy oder Phenethyloxycarbonyl substituiert sein kann, Alkenyl, Cycloalkyl, Aralkyl oder Aryl oder $R^1$ und $R^2$ zusammen, unter Einschluß des Stickstoffatoms, ein Morpholinrest sind.

2. Verbindungen gemäß Anspruch 1 der Formel Ia

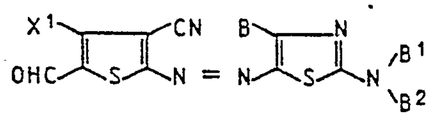

in der

$X^1$ Wasserstoff, $C_1$- bis $C_4$-Alkyl, gegebenenfalls durch Methyl, Ethyl, Methoxy, Ethoxy, Chlor, Brom oder Nitro substituiertes Phenyl, Thienyl oder Furyl,

B gegebenenfalls durch Chlor, Brom, $C_1$- bis $C_4$-Alkoxy, β-Cyanethoxy, Methyl, Ethyl oder $C_1$- bis $C_4$-Alkanoylamino substituiertes Phenyl und

$B^1$ und $B^2$ unabhängig voneinander gegebenenfalls durch Hydroxy, Cyan, $C_1$- bis $C_4$-Alkoxy, $C_1$- bis $C_8$-Alkoxycarbonyl, $C_1$- bis $C_8$-Alkanoyloxy, $C_1$- bis $C_4$-Alkoxycarbonyloxy oder $C_1$- bis $C_4$-Alkyl-aminocarbonyloxy substituiertes $C_1$- bis $C_4$-Alkyl; ferner Benzyl, Phenylethyl, Cyclohexyl, Allyl, Chlorallyl oder Phenyl sind, wobei einer der Reste $B^1$ oder $B^2$ auch Wasserstoff sein kann.

3. Verwendung der Verbindungen gemäß Anspruch 1 zum Färben textiler Fasern, insbesondere von Polyestern.

## Claims

1. A compound of the general formula I

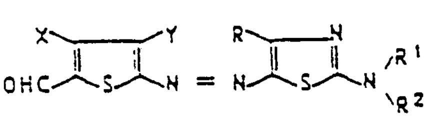 I

where

X is hydrogen, nitro, unsubstituted or chlorine-, bromine-, methoxy- or phenyl-substituted $C_1$-$C_8$-alkyl unsubstituted or chlorine-, bromine-, methyl-, ethyl-, methoxy-, ethoxy- or nitro-substituted phenyl, thienyl or

furyl, alkenyl or cycloalkyl,

Y is cyano, nitro, alkanoyl, aroyl, alkylsulfonyl, arylsulfonyl, carboxyl, carboxylate, carbamoyl, $CONHCH_3$, $CONHC_2H_5$, $CONHC_4H_9$, $CONHC_6H_{13}$, $CONHC_8H_{17}$, $CON(CH_3)_2$, $CON(C_2H_5)_2$, $CON(C_4H_9)_2$,

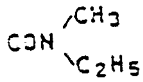, 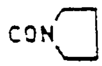, 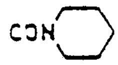 or 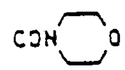,

R is unsubstituted or $C_1$-$C_{10}$-alkyl-, $c_1$-$C_{10}$-alkoxy-, β-cyanoethoxy-, phenoxy-, benzyloxy-, phenyl-, chlorine-, bromine-, nitro-, $C_1$-$C_4$-alkoxycarbonyl-, $C_1$-$C_4$-monoalkylamino- or -dialkylamino-, $C_1$-$C_4$-alkoxyethoxy-, $C_1$-$C_4$-alkylmercapto-, phenylmercapto- or $C_1$-$C_5$-alkanoylamino-monosubstituted or -polysubstituted phenyl, $C_1$-$C_4$-alkyl, $C_1$-$C_4$-alkoxycarbonylmethyl, cyanomethyl, benzyl or unsubstituted or chlorine- or methyl-substituted thienyl,

$R^1$ is hydrogen or $R^2$ and

$R^2$ is $C_1$-$C_6$-alkyl which may be substituted by chlorine, bromine, hydroxyl, $C_1$-$C_8$-alkoxy, phenoxy, cyano, carboxyl, $C_1$-$C_8$-alkanoyloxy, $C_1C_8$-alkoxy-$C_1C_4$-alkoxy, benzoyloxy, o-, m- or p-methylbenzoyloxy, o-, m- or p-chlorobenzoyloxy, $C_1$-$C_8$-alkoxyalkanoyloxy, phenoxyalkanoyloxy, $C_1$-$C_8$-alkoxycarbonyloxy, $C_1$-$C_8$-alkoxyalkoxycarbonyloxy, benzyloxycarbonyloxy, phenethyloxycarbonyloxy, phenoxyethoxycarbonyloxy, $C_1$-$C_8$-alkylaminocarbonyloxy, cyclohexylaminocarbonyloxy, phenylaminocarbonyloxy, $C_1$-$C_8$-alkoxycarbonyl, $C_1$-$C_8$-alkoxyalkoxycarbonyl, phenoxycarbonyl, benzyloxycarbonyl, phenoxy-$C_1$-$C_4$-alkoxy or phenethyloxycarbonyl, or is alkenyl, cycloalkyl, aralkyl or aryl, or $R^1$ and $R^2$ together with the nitrogen atom are morpholino.

2. A compound as claimed in claim 1 of the formula Ia

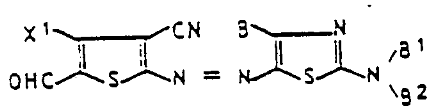 Ia

where

$X^1$ is hydrogen, $C_1$-$C_4$-alkyl, unsubstituted or methyl-, ethyl-, methoxy-, ethoxy, chlorine-, bromine- or nitro-substituted phenyl, thienyl or furyl,

B is unsubstituted or chlorine-, bromine-, $C_1$-$C_4$-alkoxy-, β-cyanoethoxy, methyl-, ethyl- or $C_1$-$C_4$-alkanoylamino-substituted phenyl, and

$B^1$ and $B^2$ are each independently of the other unsubstituted or hydroxyl-, cyano-, $C_1$-$C_4$-alkoxy-, $C_1$-$C_8$-alkoxycarbonyl, $C_1$-$C_8$-alkanoyloxy, $C_1$-$C_4$-alkoxycarbonyloxy or $C_1C_4$-alkylaminocarbonyloxy-substituted $C_1$-$C_4$-alkyl, or else benzyl, phenylethyl, cyclohexyl, allyl, chloroallyl or phenyl, although one of $B^1$ and $B^2$ can also be hydrogen.

3. The use of a compound as claimed in claim 1 for dyeing textile fibers, in particular polyesters.

**Revendications**

1. Composés de la formule générale I

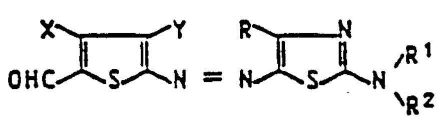 I.

dans laquelle

X représente de l'hydrogène, un radical nitro, un radical alkyle en $C_1$-$C_8$, pouvant encore être substitué par du chlore, du brome, un reste méthoxy ou phényle; un radical thiényle, furyle ou phényle éventuellement substitué par du chlore, du brome, les restes méthyle, éthyle, méthoxy, éthoxy ou nitro; ou un radical alcényle ou cycloalkyle,

Y est l'un des radicaux : cyano, nitro, alcanoyle, aroyle, alkylsulfonyle, arylsulfonyle, carboxyle, ester carbonique, carbamoyle, $CONHCH_3$, $CONHC_2H_5$, $CONHC_4H_9$, $CONHC_6H_{13}$, $CONHC_8H_{17}$, $CON(CH_3)_2$, $CON(C_2H_5)_2$, $CON(C_4H_9)_2$.

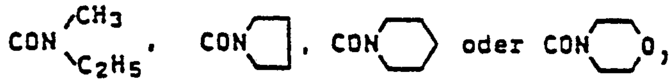
, oder

R représente un radical phényle substitué une ou plusieurs fois par les restes suivants : alkyle en $C_1$-$C_{10}$, alkoxy en $C_1$-$C_{10}$, β-cyanéthoxy, phénoxy, benzyloxy, phényle, chloro, bromo, nitro, ($C_1$-$C_4$-alkoxy)carbonyle, $C_1$-$C_4$-mono- ou dialkylamino, $C_1$-$C_4$-alkoxy-éthoxy, $C_1$-$C_4$-alkyl- ou phénylmercapto ou $C_1$-$C_5$-alcanoylamino; un radical alkyle en $C_1$-$C_4$, un radical (alkoxy en $C_1$-$C_4$)carbonylméthyle, un radical cyanométhyle, un radical benzyle, ou un radical thiényle éventuellement substitué par du chlore ou des restes méthyle,

$R^1$ représente de l'hydrogène ou $R_2$ et

$R^2$ représente un radical alkyle en $C_1$-$C_6$, qui peut être substitué par du chlore, du brome, les restes suivants : hydroxy, alkoxy en $C_1$-$C_8$, phénoxy, cyano, carboxy, alcanoyloxy en $C_1$-$C_8$, (alkoxy en $C_1$-$C_8$)-(alkoxy en $C_1$-$C_4$), benzoyloxy, o-, m-, p-méthylbenzoyloxy, o-, m-, p-chlorobenzoyloxy, $C_1$-$C_8$-alkoxyalcanoyloxy, phénoxyalcanoyloxy, $C_1$-$C_8$-alkoxycarbonyloxy, $C_1$-$C_8$-alkoxyalkoxycarbonyloxy, benzyloxycarbonyloxy, phénéthyloxycarbonyloxy, phénoxyéthoxycarbonyloxy, $C_1$-$C_8$-alkylaminocarbonyloxy, cyclohexylaminocarbonyloxy, phénylaminocarbonyloxy, $C_1$-$C_8$-alkoxycarbonyle, $C_1$-$C_8$-alkoxyalkoxycarbonyle, phénoxycarbonyle, benzyloxycarbonyle, phénoxy-$C_1$-$C_4$-alkoxy ou phénéthyloxycarbonyle; un radical alcényle, cycloalkyle, aralkyle ou aryle; ou bien $R^1$ et $R^2$ représentent ensemble et conjointement avec l'atome d'azote un radical morpholine.

2. Composés suivant la revendication 1 de la formule Ia

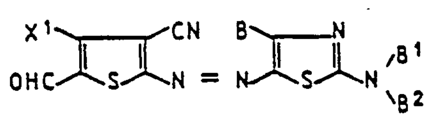
Ia

dans laquelle

$X^1$ représente de l'hydrogène, un radical alkyle en $C_1$-$C_4$, un radical thiényle, furyle ou phényle éventuellement substitué par des restes méthyle, éthyle, méthoxy, éthoxy, chloro, bromo ou nitro,

B représente un radical phényle éventuellement substitué par des restes chloro, bromo, alkoxy en $C_1$-$C_4$, β-cyanéthoxy, méthyle, éthyle ou alcanoylamino en $C_1$-$C_4$ et

$B^1$ et $B^2$ représentent, indépendamment l'un de l'autre, un radical alkyle en $C_1$-$C_4$ éventuellement substitué par des restes hydroxy, cyano, alkoxy en $C_1$-$C_4$, $C_1$-$C_8$-alkoxycarbonyle, $C_1$-$C_8$-alcanoyloxy, $C_1$-$C_4$-alkoxycarbonyloxy ou $C_1$-$C_4$-alkyl-aminocarbonyloxy; et en outre des radicaux benzyle, phényléthyle, cyclohexyle, allyle, chlorallyle ou phényle, l'un des radicaux $B^1$ ou $B^2$ pouvant aussi être de l'hydrogène.

3. Utilisation des composés suivant la revendication 1 pour la teinture de fibres textiles, en particulier de polyesters.